# FASCICULE DE BREVET EUROPEEN

(11) **EP 0 880 199 B1**
(45) Date de publication et mention de la délivrance du brevet: **19.12.2001**
(21) Numéro de dépôt: 98401172.6
(22) Date de dépôt: 15.05.1998
(51) Int. Cl.: H01R 4/50, F16B 3/06

(54) **Insert pour la fixation d'une cosse de raccordement électrique sur une paroi mince, et ses procédés de montage et de démontage**
Einsatz zur Verbindung einer elektrischen Anschlussklemme auf einer dünnen Wand und Verfahren zum Montieren und Demontieren
Insert for the connection of an electrical terminal on a thin wall and method for assembly and disassembly

(30) Priorité: 23.05.1997 FR 9706295
(43) Date de publication de la demande: 25.11.1998
(73) Titulaire: DUBUIS Société Anonyme, F-41007 Blois Cedex (FR)
(72) Inventeur: Courtois, Alain, 41000 Blois (FR); Huet, Jean-Pierre, 41000 Blois (FR)
(74) Mandataire: Chambon, Gérard

(56) Documents cités:
- EP-A- 0 575 259
- EP-A- 0 677 419
- US-A- 2 248 845

## Description

L'invention concerne un insert pour la fixation d'une cosse de raccordement électrique sur une paroi mince, et ses procédés de montage et de démontage.

Il est notamment connu par le brevet EP-0 575 259, au nom du même titulaire, de fixer une cosse, par exemple dans l'âme d'un rail de voie ferrée, au moyen d'un insert qui est d'une manière générale constitué par une cheville métallique, pourvue d'une tête tronconique et d'un prolongement fileté, et par une bague métallique non fendue qui est munie d'au moins un épaulement de retenue, ladite tête de la cheville étant destinée à être enfilée dans la bague, du côté opposé à son épaulement de retenue, tandis que l'ensemble est prévu pour être introduit dans un perçage ménagé dans la paroi, tandis que la cosse est solidaire de la bague ou fixée entre celle-ci et un écrou vissé sur le prolongement fileté de la cheville.

Il s'agit dans cet art antérieur de fixer une cosse sur une paroi relativement épaisse et la fixation s'effectue par expansion de la bague qui présente spécifiquement à cet effet un alésage intérieur sensiblement tronconique tandis que l'épaulement est une collerette en outre munie d'une gorge annulaire.

Pour un raccordement électrique, les avantages d'une bague non fendue ont été exposés dans le brevet précité (meilleur contact, étanchéité, ...).

On comprend aisément qu'un tel insert n'est pas particulièrement bien adapté pour une paroi mince dont l'épaisseur ne permettrait pas une expansion suffisante de la bague.

C'est pourquoi les inventeurs ont imaginé un nouvel insert qui garde les avantages de l'insert précité mais qui s'adapte mieux aux parois minces.

A cet effet, l'insert est du type précité dans sa généralité mais il est remarquable et diffère de cet art connu en ce que l'alésage intérieur de la bague est initialement cylindrique, et que la dimension longitudinale de cette dernière, de son extrémité libre à son épaulement de retenue, est nettement supérieure à l'épaisseur de la paroi de manière que sa partie dépassante de ladite paroi, du côté de la tête tronconique de la cheville, se déforme en s'évasant au cours de l'enfoncement de ladite tête de la cheville dans la bague.

Selon un mode de réalisation intéressant mais non obligatoire, la bague présente un double épaulement en gradin, le premier servant d'épaulement de retenue de la bague sur la paroi et le suivant, dit d'arrachage, permettant d'assurer une prise par un outil d'arrachage de la bague.

L'épaulement de retenue de la bague peut en outre être pourvu d'une gorge annulaire ménagée au niveau de son raccordement avec la surface extérieure de ladite bague.

La cheville est, par exemple, en acier inoxydable et la bague en cuivre étamé, tandis qu'avantageusement la cheville et la bague sont pré-assemblées l'une dans l'autre avant utilisation.

L'invention propose aussi, d'une part, un procédé de montage d'un tel insert dans une paroi, qui est remarquable en ce qu'il consiste à réaliser un perçage dans la paroi et à marquer la surface périphérique intérieure du perçage en formant des stries, à introduire l'insert dans le perçage jusqu'à ce que l'épaulement de retenue de la bague vienne au contact de la paroi, puis à exercer une traction sur la tige de la cheville pour entraîner une expansion diamétrale de la bague au cours de la pénétration de ladite cheville, ainsi que, d'autre part, un procédé de démontage qui est remarquable en ce qu'il consiste, après avoir au besoin dévissé l'écrou et déposé la cosse, à retirer la cheville de la bague en frappant sur son extrémité opposée à sa tête tronconique, à forer la bague pour augmenter son diamètre intérieur afin d'en réduire l'épaisseur et donc sa résistance, puis à retirer ladite bague.

Pour le démontage d'un insert pourvu d'un double épaulement comme précisé ci-avant, on peut aussi en outre arracher la bague au moyen d'un outil qui vient prendre appui sur la paroi tout en s'agrippant sur l'épaulement d'arrachage.

L'invention sera bien comprise et d'autres particularités apparaîtront à la lecture de la description qui va suivre et qui se réfère aux dessins annexés dans lesquels:
- la figure 1 montre un insert selon l'invention dont les deux pièces constitutives sont séparées,
- la figure 2 correspond à la figure 1 avec les deux pièces constitutives assemblées,
- la figure 3 montre l'insert des figures 1 et 2 mis en place dans une paroi et sur lequel est fixée une cosse de raccordement électrique,
- les figures 4, 5 et 6 correspondent exactement aux figures respectivement 1, 2 et 3 et montrent un mode de réalisation légèrement différent,
- les figures 7 à 10 montrent schématiquement une étape préparatoire au montage d'un insert selon l'invention,
- les figures 11, 12 et 13 montrent schématiquement trois étapes de démontage d'un insert selon l'invention et plus particulièrement selon le mode de réalisation des figures 4, 5 et 6.

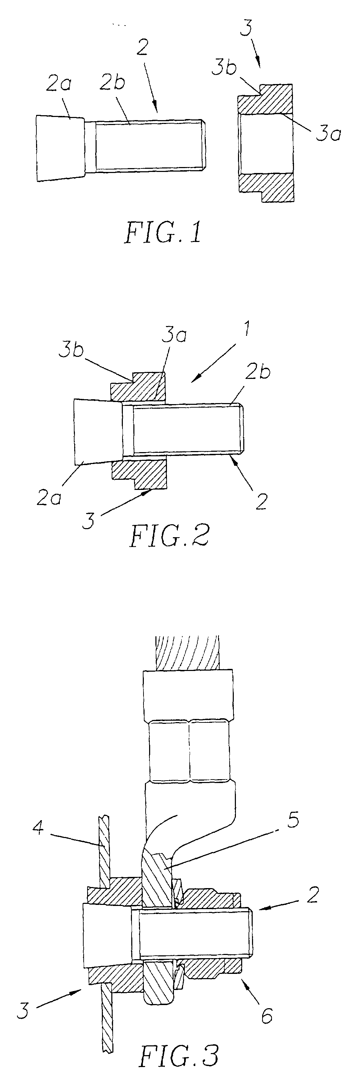

L'insert 1 selon l'invention est constitué par une cheville 2 métallique (par exemple en acier inoxydable) et une bague 3 en alliage cuivreux (cuivre étamé par exemple) ou un autre métal approprié. Pour des raisons de clarté, on a conservé la même référence 3 pour la bague des modes de réalisations des figures 1 à 3 et respectivement 4 à 6, car ladite bague ne diffère d'un mode de réalisation à l'autre que par des moyens complémentaires.

La cheville 2 présente une tête 2a de forme tronconique et un prolongement sous forme d'une tige cylindrique 2b filetée extérieurement.

La bague 3 (figures 1,2 et 4, 5), qui est non fendue et qui présente ici une forme extérieure cylindrique, comporte un alésage intérieur 3a cylindrique.

La partie extérieure de la bague 3 comporte un épaulement 3b, dit de retenue.

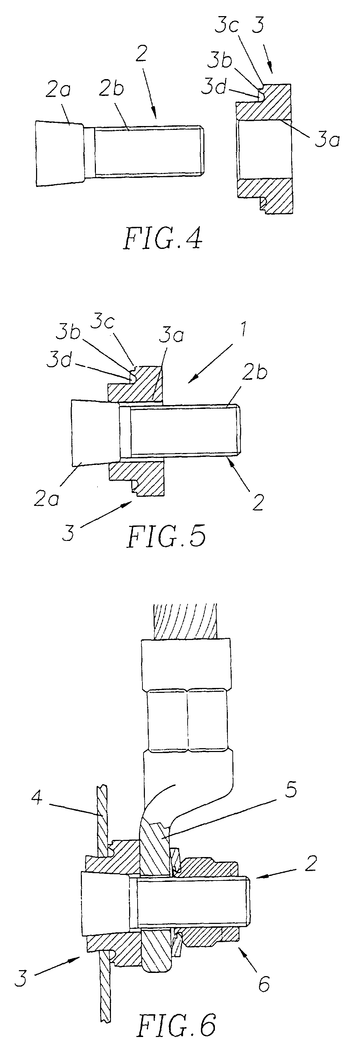

Dans le mode de réalisation non obligatoire, représenté sur les figures 4 à 6 et 11 à 13, l'épaulement 3b de la bague 3 est suivi d'un deuxième épaulement 3c formant un gradin et ledit épaulement 3b est en outre pourvu d'une gorge annulaire 3d ménagée au niveau de son raccordement avec la surface extérieure cylindrique de ladite bague 3.

La gorge annulaire 3d permet notamment une meilleure expansion de la bague 3 comme décrit dans le brevet antérieur EP-0 575 259, tandis que l'épaulement 3c permet un arrachage de la bague, comme il sera expliqué ci-après.

Dans le mode de réalisation des figures précitées 4 à 6 et 11 à 13, la bague 3 présente donc un deuxième épaulement 3c et une gorge 3d, mais il est clair qu'un mode de réalisation pourvu seulement d'une gorge 3d, sans deuxième épaulement, ou encore un mode de réalisation pourvu seulement d'un deuxième épaulement 3c, sans gorge annulaire, sont parfaitement envisageables.

Avant utilisation, l'insert 1 se présente sous la forme montrée aux figures 2 et 5, c'est-à-dire que la cheville 2 est déjà introduite et légèrement coincée dans la bague 3, la tête tronconique 2a étant introduite par son plus petit diamètre, correspondant sensiblement au diamètre intérieur de l'alésage 3a, dans la bague 3 du côté opposé aux épaulements 3b, 3c de ladite bague.

L'insert représenté sur les figures 1, 2 et 4, 5 est destiné à venir se fixer sur une paroi mince 4 (figures 3 et 6).

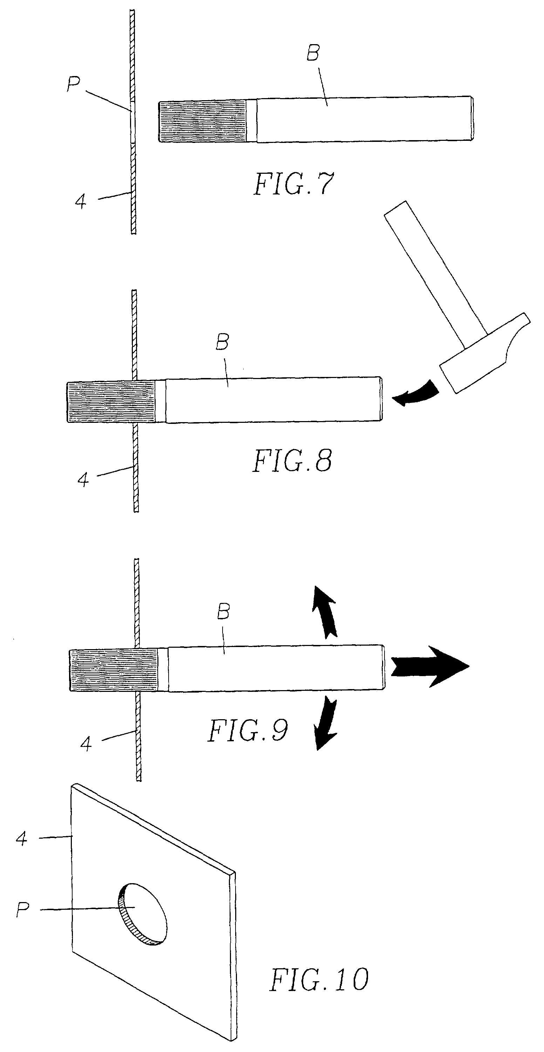

Au préalable, la paroi 4 est percée ou poinçonnée pour former un perçage P (figures 7 et 10) dont le diamètre intérieur correspond sensiblement au diamètre extérieur de la bague 3 dans sa partie la plus étroite.

De préférence, la surface périphérique intérieure du perçage P précité est marquée à l'aide, par exemple, d'une broche conique striée B (figures 7 à 10) afin d'obtenir un meilleur maintien de l'insert qui est introduit dans ledit perçage, comme le montrent les figures 3 et 6, c'est-à-dire jusqu'à ce que l'épaulement de retenue 3b vienne s'appliquer sur la paroi 4. Comme le montrent bien lesdites figures 3 et 6, la dimension longitudinale de la bague, de son extrémité libre à son épaulement de retenue 3b, est choisie de manière à être nettement supérieure à l'épaisseur de la paroi 4 de façon à bien dépasser de cette dernière du côté de la tête tronconique 2a de la cheville (par exemple d'une valeur comprise entre 20% et plusieurs fois l'épaisseur de ladite paroi).

Pour fixer et bloquer l'insert, il suffit ensuite d'exercer une traction sur la tige filetée 2b de la cheville pour entraîner une expansion diamétrale de la bague 3 au cours de la pénétration de ladite cheville.

La traction exercée sur la tige filetée 2b est par exemple, mais pas nécessairement, effectuée au moyen d'un outil hydraulique.

Comme le montrent bien les dessins, l'expansion de la bague provoque un évasement de la partie dépassante de celle-ci, et le diamètre extérieur de cette partie dépassante devient nettement supérieur au diamètre du perçage P assurant ainsi un coincement forcé et un excellent contact électrique entre la bague 3 et la paroi 4, contact électrique qui est amélioré du fait aussi que la surface intérieure périphérique du perçage est parfaitement décapée grâce à l'action précitée de la broche striée B.

Comme le montrent encore les figures 3 et 6, une cosse 5 de raccordement électrique peut facilement être alors fixée sur la tige 2b de la cheville par serrage entre la bague 3 et un écrou 6, ici à rondelle élastique.

Une telle cosse 5 est par exemple destinée à effectuer une mise à la masse et on comprend que toutes les surfaces assurent un parfait contact électrique et qu'un serrage de l'écrou 6 ne peut agir que dans le sens de l'expansion diamétral de la bague 3.

En cas de besoin, on peut facilement retirer un tel insert malgré son expansion à l'arrière de la paroi.

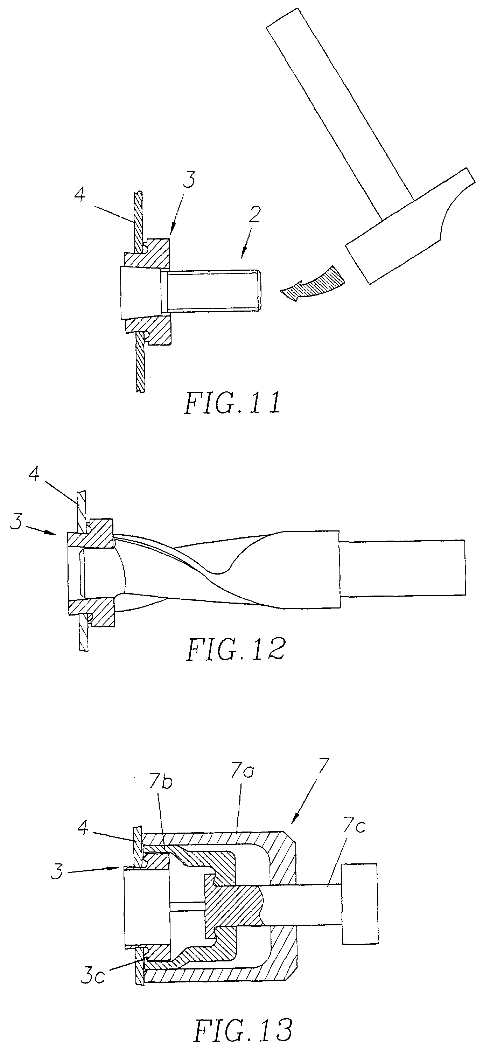

Il suffit en effet, après avoir dévissé l'écrou 6 et déposé la cosse 5, de retirer la cheville 2 de la bague 3 en frappant sur son extrémité opposée à sa tête tronconique, comme représenté à la figure 11.

Ensuite et généralement, on fore la bague pour augmenter son diamètre intérieur comme représenté à la figure 12, puis on retire ladite bague 3 au moyen, par exemple, d'un tournevis ou similaire. Toutefois, pour le mode de réalisation des figures 4 à 6, on peut arracher la bague 3 en utilisant un outil 7 spécifique (figure 13) qui vient d'une part, prendre appui sur la paroi 4 par un étrier 7a, tout en venant, d'autre part, en prise sur l'épaulement d'arrachement 3c de la bague par un étrier 7b approprié qui est entraîné par un moyen de traction 7c.

D'autre particularités peuvent bien sûr être imaginées sans sortir de cadre de l'invention. C'est ainsi notamment que la cosse 5 pourrait être d'une seule pièce avec la bague 3.

## Revendications

1. Insert (1) pour la fixation d'une cosse (5) de raccordement électrique sur une paroi mince (4), et qui est constitué par une cheville métallique (2), pourvue d'une tête tronconique (2a) et d'un prolongement fileté (2b), et par une bague métallique non fendue (3) qui est munie d'au moins un épaulement de retenue (3b), ladite tête (2a) de la cheville étant destinée à être enfilée dans la bague (3), du côté opposé à son épaulement de retenue, tandis que l'ensemble est prévu pour être introduit dans un perçage (P) ménagé dans la paroi (4), tandis que la cosse (5) est solidaire de la bague (3) ou fixée entre celle-ci et un écrou (6) vissé sur le prolongement fileté (2b) de la cheville, insert ***caractérisé* en ce que** l'alésage intérieur (3a) de la bague (3) est initialement cylindrique, et que la dimension longitudinale de cette dernière, de son extrémité libre à son épaulement de retenue (3b), est nettement supérieure à l'épaisseur de la paroi (4) de manière que sa partie dépassante de ladite paroi, du côté de la tête tronconique (2a) de la cheville (2), se déforme en s'évasant au cours de l'enfoncement de ladite tête de la cheville dans la bague (3).

2. Insert selon la revendication 1, ***caractérisé* en ce que** la bague (3) présente un double épaulement en gradin (3b,3c), le premier (3b) servant d'épaulement de retenue de la bague sur la paroi (4) et le suivant (3c), dit d'arrachage, permettant d'assurer une prise par un outil d'arrachage de la bague.

3. Insert selon la revendication 1, ***caractérisé* en ce que** l'épaulement de retenue (3b) de la bague (3) est pourvu d'une gorge annulaire (3d) ménagée au niveau de son raccordement avec la surface extérieure de ladite bague (3).

4. Insert selon l'une des revendications 1 à 3, ***caractérisé* en ce que** la cheville (2) est en acier inoxydable et la bague (3) en cuivre étamé.

5. Insert selon l'une des revendications 1 à 4, ***caractérisé* en ce que** la cheville (2) et la bague (3) sont pré-assemblées l'une dans l'autre avant utilisation.

6. Procédé de montage d'un l'insert selon l'une des revendications 1 à 5 dans une paroi (4), ***caractérisé* en ce qu'**il consiste à réaliser un perçage (P) dans ladite paroi (4) et à marquer la surface périphérique intérieure du perçage en formant des stries, à introduire l'insert (1) dans le perçage jusqu'à ce que l'épaulement de retenue (3b) de la bague vienne au contact de la paroi, puis à exercer une traction sur la tige (2b) de la cheville (2) pour entraîner une expansion diamétrale de la bague (3) au cours de la pénétration de ladite cheville.

7. Procédé de démontage d'un insert selon l'une des revendications 1 à 5 monté sur une paroi (4), ***caractérisé* en ce qu'**il consiste, après avoir au besoin dévissé l'écrou (6) et déposé la cosse (5), à retirer la cheville (2) de la bague (3) en frappant sur son extrémité opposée à sa tête tronconique (2a), à forer la bague (3) pour augmenter son diamètre intérieur afin d'en réduire l'épaisseur et donc sa résistance, puis à retirer ladite bague (3).

8. Procédé de démontage d'un insert selon l'une des revendications 2 à 6 monté sur une paroi (4), ***caractérisé* en ce qu'**il consiste à arracher la bague (3) au moyen d'un outil (7) qui vient prendre appui sur la paroi (4) tout en s'agrippant sur l'épaulement d'arrachage (3c).

## Patentansprüche

1. Einsatz (1) zur Befestigung einer elektrischen Anschlußklemme (5) auf einer dünnen Wand (4), bestehend aus einem Metallbolzen (2), der mit einem kegelstumpfförmigen Kopf (2a) und einem ein Gewinde tragenden Fortsatz (2b) versehen ist, und aus einem ungeschlitzten Ring (3), der mit mindestens einem Rücksprung (3b) ausgestattet ist, wobei der Bolzenkopf (2a) zum Einführen in den Ring (3) von der dem Rücksprung gegenüberliegenden Seite bestimmt ist, während das Ganze zum Einsetzen in eine in der Wand (4) vorbereitete Bohrung (P) vorgesehen ist, während die Klemme (5) mit dem Ring (3) einstückig oder zwischen diesem und einer auf dem Fortsatz (2b) des Bolzens (2) aufgeschraubten Mutter (6) befestigt ist, **dadurch gekennzeichnet, daß** die Innenbohrung (3a) des Rings (3) anfangs zylindrisch ist, daß die Längsabmessung des Rings von seinem freien Ende bis zum Rücksprung (3b) die Dicke der Wand (4) deutlich übersteigt, sodaß sein aus der Wand hervorstehender Teil sich durch die Seite des kegelstumpfförmigen Kopfs (2a) des Bolzens (2) beim Eintreiben des Bolzenkopfs in den Ring (3) unter Aufweitung verformt.

2. Einsatz nach Anspruch 1, **dadurch gekennzeichnet, daß** der Ring (3) einen doppelten abgestuften Rücksprung (3b, 3c) aufweist, wobei der erste (3b) als Halterung für den Ring auf der Wand (4) dient, und der andere, der Ausreißrücksprung, das Sichern des Ergreifens durch ein Ausreißwerkzeug erlaubt.

3. Einsatz nach Anspruch 1, **dadurch gekennzeichnet, daß** der Rücksprung (3b) des Rings (3) auf der Höhe seiner Verbindung zur Außenfläche des Rings mit einer Ringnut (3d) versehen ist.

4. Einsatz nach einem der Ansprüche 1 bis 3, **dadurch gekennzeichnet, daß** der Bolzen (2) aus Edelstahl und der Ring (3) aus verzinntem Kupfer besteht.

5. Einsatz nach einem der Ansprüche 1 bis 4, **dadurch gekennzeichnet, daß** der Bolzen (2) und der Ring (3) vor dem Gebrauch ineinander vormontiert sind.

6. Verfahren zum Montièren eines Einsatzes nach einem der Ansprüche 1 bis 5 in einer Wand (4), **dadurch gekennzeichnet, daß** es umfaßt:
- die Herstellung einer Bohrung (P) in der Wand,
- die Markierung der inneren Umfangsfläche der Bohrung durch Bildung von Rillen,
- Einführen des Einsatzes (1) in die Bohrung, bis der Rücksprung (3b) des Rings (3) die Wand berührt, und danach
- Ausüben eines Zugs auf den Stab (2b) des Bolzens (2), um eine diametrale Ausdehnung des Rings (3) infolge des Eindringens des Bolzens zu bewirken.

7. Verfahren zum Demontieren eines auf einer Wand (4) befestigten Einsatzes nach einem der Ansprüche 1 bis 5, **dadurch gekennzeichnet, daß** es, nachdem man nötigenfalls die Mutter (6) abgeschraubt und die Klemme (5) abgenommen hat, umfaßt:
- Herausziehen des Bolzens (2) aus dem Ring (3) durch Schlagen auf das dem kegelstumpfförmigen Kopf (2a) entgegengesetzte Ende,
- Aufbohren des Rings (3) zur Vergrößerung seines Innendurchmessers, um seine Dicke und damit seine Widerstandskraft zu vermindern, und danach
- Herausziehen des Rings (3).

8. Verfahren zum Demontieren eines auf einer Wand (4) befestigten Einsatzes nach einem der Ansprüche 2 bis 5, **dadurch gekennzeichnet, daß** es das Herausreißen des Rings (3) mittels eines Werkzeugs (7) umfaßt, das sich auf die Wand (4) stützt, wobei es sich an den Ausreißrücksprung (3c) anklammert.

## Claims

1. Insert (1) for fixing an electrical connecting terminal (5) to a thin wall (4) and which is formed by a metal pin (2) provided with a head (2a) in the shape of a truncated cone and a threaded extension (2b), and by a metal bush (3) which is not split and is provided with at least one retaining shoulder (3b), said head (2a) of the pin being designed to be threaded into the bush (3), on the opposite side to its retaining shoulder, while the assembly is designed to be introduced into a drilling (P) formed in the wall (4), while the terminal (5) is locked to the bush (3) or fixed between the latter and a nut (6) screwed onto the threaded extension (2b) of the pin, said insert being **characterised in that** the internal bore (3a) of the bush (3) is initially cylindrical, and **in that** the longitudinal dimension of the latter, from its free end to its retaining shoulder (3b), is significantly greater than the thickness of the wall (4) so that its portion extending beyond said wall, on the side of the head (2a) in the shape of a truncated cone of the pin (2), is deformed by flaring outwards in the course of the penetration of said head of the pin in the bush (3).

2. Insert according to claim 1, **characterised in that** the bush (3) exhibits a double stepped shoulder (3b, 3c), the first (3b) serving as retaining shoulder retaining the bush in the wall (4), and the following so-called extraction shoulder (3c) providing grip for a tool for extraction of the bush.

3. Insert according to claim 1, **characterised in that** the retaining shoulder (3b) retaining the bush (3) is provided with an annular groove (3d) formed level with its connection with the external surface of said bush (3).

4. Insert according to one of claims 1 to 3, **characterised in that** the pin (2) is made of stainless steel and the bush (3) of tinned copper.

5. Insert according to one of claims 1 to 4, **characterised in that** the pin (2) and the bush (3) are pre-assembled one in the other before use.

6. Process for fitting an insert according to one of claims 1 to 5 in a wall (4), **characterised in that** it consists in forming a drilling (P) in said wall (4) and in marking the internal peripheral surface of the drilling forming stripes, in introducing the insert (1) in the drilling until the retaining shoulder (3b) of the bush comes into contact with the wall, then in exerting a pull on the shank (2b) of the pin (2) to produce a diametrical expansion of the bush (3) in the course of penetration of said pin.

7. Process for removing an insert according to one of claims 1 to 5 fitted in a wall (4), **characterised in that** it consists, after having if necessary unscrewed the nut (6) and removed the terminal (5), in withdrawing the pin (2) from the bush (3) by striking it on its opposite end to its head (2a) in the shape of a truncated cone, in drilling the bush (3) to increase its internal diameter in order to reduce its thickness and thus its strength, then in withdrawing said bush (3).

8. Process for removing an insert according to one of claims 2 to 5 fitted in a wall (4), **characterised in that** it consists in extracting the bush (3) by means of a tool (7) which bears on the wall (4) while gripping over the extraction shoulder (3c).
